# EUROPEAN PATENT SPECIFICATION

(11) **EP 3 380 776 B1**
(45) Date of publication and mention of the grant of the patent: **11.08.2021**
(21) Application number: 15813178.9
(22) Date of filing: 25.11.2015
(51) Int. Cl.: F17C 1/06, F17C 1/16, F17C 11/00, F17C 13/00

(54) **COMPOSITE PRESSURE VESSEL ASSEMBLY AND METHOD OF MANUFACTURING**
VERBUNDDRUCKBEHÄLTERANORDNUNG UND VERFAHREN ZUR HERSTELLUNG
ENSEMBLE RÉCIPIENT SOUS PRESSION COMPOSITE ET PROCÉDÉ DE FABRICATION

(43) Date of publication of application: 03.10.2018
(73) Proprietor: Raytheon Technologies Corporation, Farmington, CT 06032 (US)
(72) Inventor: ZHAO, Wenping, East Hartford, Connecticut 06108 (US); SUN, Ellen Y., East Hartford, Connecticut 06108 (US)
(74) Representative: Schmitt-Nilson Schraud Waibel Wohlfrom Patentanwälte Partnerschaft mbB
(86) International application number: PCT/US2015/062646
(87) International publication number: WO 2017/091222

(56) References cited:
- FR-A1- 2 739 912
- JP-A- 2009 041 710
- US-A- 3 170 197
- US-A- 5 704 514
- US-A- 5 904 972
- US-A1- 2013 220 479

## Description

The present disclosure relates to a method of manufacture of a pressure vessel assembly and more particularly of a composite pressure vessel assembly.

Pressure vessels may serve as a storage media (e.g., gas) for a wide variety of consumer, commercial, and industrial processes. In order to store sufficient gas for any operation within a given volume, the gas is stored at high pressure. Traditionally, pressure vessels have a typical spherical or cylindrical cross-section design that evenly distributes stress in the containment perimeter. Unfortunately, such tanks do not use allocated space efficiently. For example, a spherical vessel fills a cubic space with about fifty-two percent efficiency, and a cylindrical vessel fills a rectangular volume with approximately seventy-eight percent efficiency. More recent improvements in pressure vessels that generally conform to a rectangular volume may fill the space with about ninety percent efficiency relative to a true rectangular volume.

The designs of non-spherical/cylindrical pressure vessels to support high internal pressure are complex, including variable-curvature external surfaces and internal structure to transfer mechanical load. The large size of a high conformable vessel and the complicated shapes makes manufacturing challenging. In addition, manufacturing needs to consistently provide reliable, high-volume, lightweight and low-cost constructions.

US 2013/0220479 A1 shows a storage tank having a porous flexible container. The container is filled with natural gas adsorption material to adsorb methane rich gas from a landfill, a coal layer, or an oil or gas field.

FR 2 739 912 A1 shows a a storage tank comprising multiple honeycomb shaped chambers. The chambers are interconnected by a plurality of passages. A bottle tank is produced by injection blow molding or extrusion blow molding.

JP 2009 041710 A shows a gas tank having a liner. The liner comprises a plurality of communication holes.

US 5704514A shows a pressure vessel of a composite construction.

A method of manufacturing a composite pressure vessel assembly according to claim 1 is disclosed. Preferred embodiments can be found in dependent claims 2-8.

### BRIEF DESCRIPTION OF THE DRAWINGS

Various features will become apparent to those skilled in the art from the following detailed description of the disclosed non-limiting embodiments. The drawings that accompany the detailed description can be briefly described as follows:
FIG. 1 is a perspective view of a pressure vessel assembly configured to store a pressurized fluid according to an exemplary embodiment of the invention;
FIG. 2 is an exploded perspective view of liners of the pressure vessel assembly;
FIG. 3 is a cross section of the liners;
FIG. 4 is a perspective cross section of the liners with a mid-layer applied; and
FIG. 5 is a perspective cross section of the pressure vessel assembly.

### DETAILED DESCRIPTION OF THE INVENTION

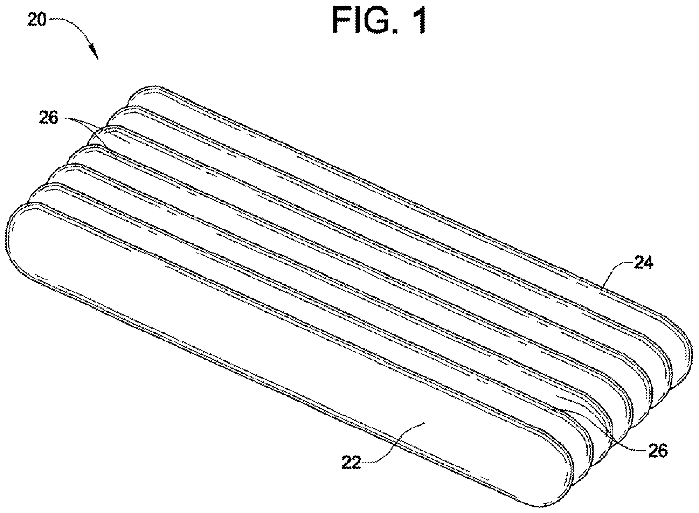

Referring now to FIG. 1, an example of a pressure vessel or tank assembly 20 configured to store a high pressure fluid is illustrated. Exemplary fluids that may be stored within the pressure vessel 20 include, but are not limited to, compressed natural gas (CNG), hydrogen, propane, methane, air, and hydraulic fluid, for example. The pressure vessel assembly 20 may generally include two flanking vessels 22, 24 and at least one interior vessel 26 (e.g., five identical interior vessels illustrated) joined to and disposed between the flanking vessels 22, 24. Each vessel 22, 24, 26 may generally be elongated with the overall configuration of the pressure vessel assembly 20 generally being a rectangular shape, but as will be appreciated from the description, herein, other shapes are contemplated.

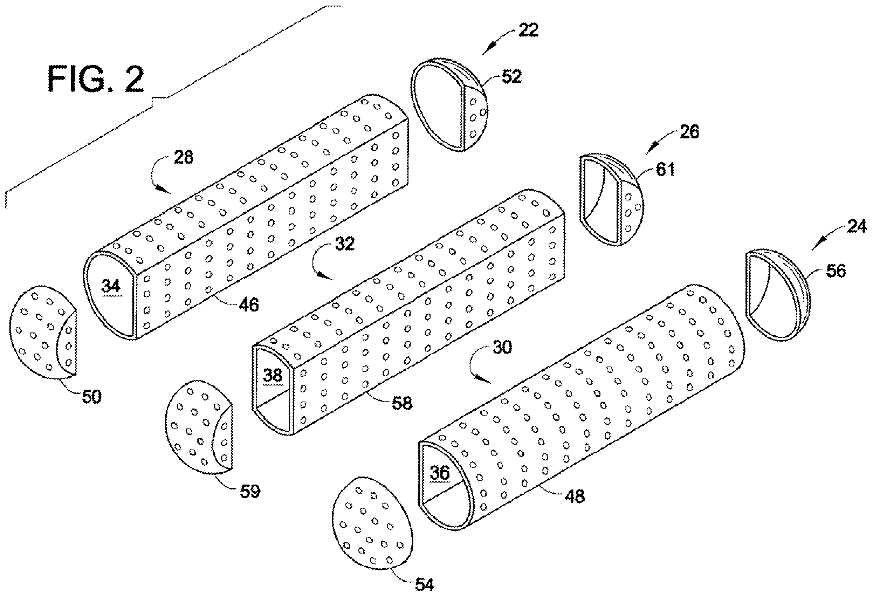

Referring to FIG. 2, each vessel 22, 24, 26 may include respective liners 28, 30, 32. Each liner 28, 30, 32 may define the boundaries of respective chambers 34, 36. 38 for the fluid storage. The flanking end liners 28, 30 may include respective lobes 46, 48 with lobe 46 closed-off by opposite end caps 50, 52 and lobe 46 closed-off by opposite end caps 54, 56. Each lobe 46, 48 may be circumferentially continuous. The interior liner 32 may include a lobe 58 with the lobe 58 closed-off by opposite end caps 59, 61. Lobe 58 may be circumferentially continuous. The liners 28, 30, 32 may be made of any material and thicknesses capable of providing the necessary structural support, weight, operating characteristics, cost limitations and other parameters suitable for a particular application. Examples of liner material may include any metallic alloy and plastics (e.g., polymers). The liners may further be blow-molded plastic, or injection molded plastic.

The liners 28, 30, 32 further include a plurality of perforations 63. The perforations 63 may be formed after the formation of the liners 28, 30, 32, or may be part of the raw material used to form the liners. For example, the liners 28, 30, 32 may be formed from a perforated or mesh sheet. Alternatively, the liners 28, 30, 32 may be formed with the perforations 63 by an additive manufacturing process.

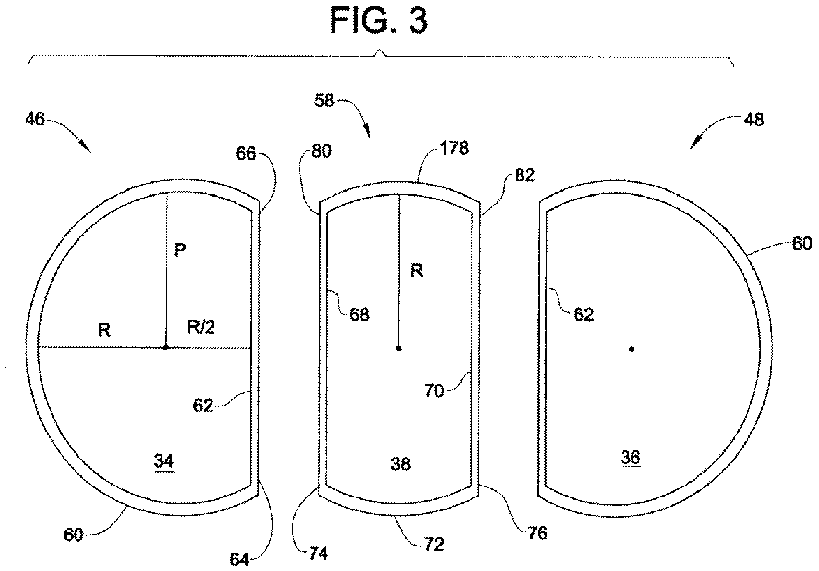

Referring to FIG. 3, the lobes 46, 48 of the respective flanking liners 28, 30 may be substantially identical and are arranged such that the lobe 46 of the first flanking liner 28 is rotated about one-hundred and eighty (180) degrees relative to the lobe 48 of the opposite flanking liner 30 (i.e., are arranged as a mirror image of one-another). Each flanking lobe 46, 48 may include a generally cylindrical outer portion or wall 60 and an interior portion or wall 62. The interior wall 62 may be substantially planar and may laterally span between a first end 64 and a second end 66 of the cylindrical outer wall 60. In one embodiment, the interior wall 62 is integrally formed with the ends 64, 66 of the cylindrical outer wall 60. At least a portion of the curvature of the cylindrical outer wall 60 is defined by a radius R. In one embodiment, the portion of the outer wall 60, opposite the interior wall 62, includes a circular shape or curve generally of a two-hundred and forty (240) degree angle as defined by the radius R. Consequently, the overall height of the flanking lobes 46, 48 is equal to double the length of the radius R of the cylindrical outer wall 60. The vertical interior wall 62 is generally parallel to and spaced apart from a vertical plane P that includes the origin of the radius R that defines the curvature of the outer wall 60. In one embodiment, the distance between the interior wall 62 and the parallel vertical plane P is about half the length of the radius R. As a result, the flanking lobes 46, 48 generally have a width equal to about one and a half the length of the radius of curvature R of the outer wall 60.

The illustrated interior lobe 58 includes first and second interior sidewalls 68, 70 that may be diametrically opposite one another, substantially vertically arranged, and separated from one another by a distance. In one embodiment, the width of the interior lobe 58 is generally equal to the radius of curvature R of the end lobes 46, 48. The thicknesses of the first interior sidewall 68 and the second interior sidewall 70 may be identical and may be equal to the thickness of the interior wall 62 of the flanking lobes 46, 48. A first outside wall 72 extends between a first end 74 of the first interior sidewall 68 and a first end 76 of the second interior sidewall 70. Similarly, a second outside wall 78 extends between a second end 80 of the first interior sidewall 68 and a second end 82 of the second interior sidewall 70.

The curvature of the first outside wall 72 and the second outside wall 78 may be defined by a circular shape or curve generally of a sixty (60) degree angle by a radius R. In one embodiment, the radius of curvature R of the interior lobe 58 is substantially identical to the radius of curvature R of the flanking lobes 46, 48. Consequently, the distance between the first curved wall 72 and the second curved wall 78 is double the length of the radius of curvature R, and is therefore, substantially equal to the height of the flanking lobes 46, 48.

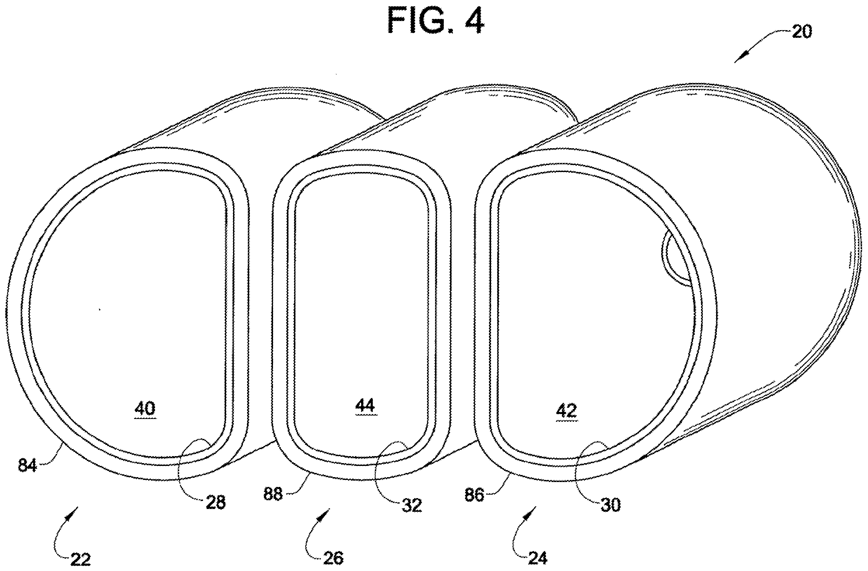

Referring to FIG. 4, the vessels 22, 24, 26 each include a mid-layer 84, 86, 88 that substantially covers the respective liners 28, 30, 32. The mid-layer 84 may be made of a chopped fiber that may be sprayed onto the liners 28, 30, 32. The fibers may be about one (1) inch (2.54 cm) in length, and may be made of carbon, glass, aramid, or other suitable material. Sprayed along with the fibers may be a binder that may be in powder form. During manufacture (i.e., during the spraying process), an inert gas or air suction may be applied to the liners 28, 30, 32, for example, connecting the chambers 34, 36, 38 to a vacuuming source. This vacuum promotes the uniform distribution and the attachment of the fibers and binder upon the liners 28, 30, 32. Once sprayed, the fibers may be consolidated (and the binder cured), at least in-part, on the liners 28, 30, 32 by the application of pressure and heat.

After the spray application of the mid-layers 84, 86, 88, the liners 28, 30, 32 may be positioned alongside one-another such that the mid-layer 88 is in contact with, and located between, the mid-layers 84, 86. More specifically, when the composite vessel assembly 20 is at least partially assembled, the interior wall 62 of the flanking lobe 46 is opposed and in proximity to the interior sidewall 68 of the interior lobe 58. The portion of the mid-layer 84 covering the interior wall 62 may be directly adjacent and adhered to (i.e., if binder present) the portion of the mid-layer 88 that covers the sidewall 68. Similarly, the interior wall 62 of the flanking lobe 48 is opposed and in proximity to the interior sidewall 70 of the interior lobe 58. The portion of the mid-layer 86 covering the interior wall 62 may be directly adjacent and adhered to the portion of the mid-layer 88 that covers the sidewall 70.

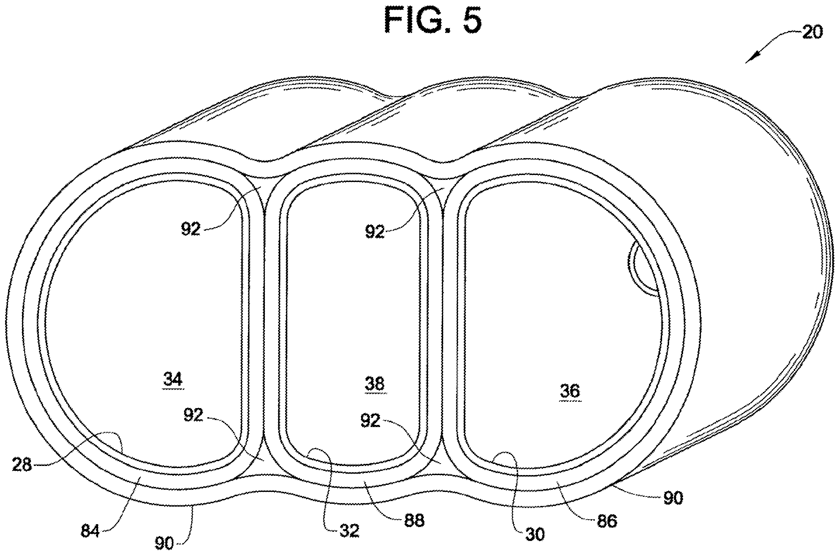

Referring to FIG. 5, the composite vessel assembly 20 may include an outer layer 90 that generally covers and envelops the mid-layers 84, 86, 88. The outer layer 90 may be applied after the mid-layers 84, 86, 88 are assembled together. Similar to the composition and application of the mid-layers 84, 86, 88, outer layer 90 may be made of a non-continuous fiber (e.g., chopped fiber) that may be sprayed onto portions of the mid-layers 84, 86, 88 not already in contact with one-another. The chopped fibers may be made of carbon, glass, aramid, or other suitable material. Sprayed along with the chopped fibers may be a binder that may be in powder form. During the spraying process of the outer layer 90, the air suction performed during application of the mid-layers 84, 86, 88 is maintained. It is further contemplated and understood that the binder may be a polymeric fiber (e.g., chopped polymeric fiber) that may be mixed and sprayed along with the fibers of at least one of the mid-layers 84, 86, 88 and/or the outer layer 90. After spraying, heat may then be applied to melt the polymeric fibers thereby consolidating the composite vessel assembly 20 together.

The composite vessel assembly 20 may further include a plurality of junctions 92 with each junction located where respective ends of the outer walls 60, 72, 78, ends of the sidewalls 68, 70, and ends of interior walls 62 generally meet. Each junction 92 may generally be Y-shaped (i.e., a three pointed star) and may be made of the same material as the outer layer 90.

After application of the outer layer 90, the entire assembly 20 may again be consolidated and the binders cured with heat and pressure. If the chopped fibers include thermoplastic fibers, this process step may be a full consolidation, which will produce a fully integrated, composite, vessel assembly. Alternatively, this process may only be a partial consolidation. After partial consolidation, the vessel assembly 20 may be infiltrated with resin and cured into the final composite vessel assembly 20. Examples of resin may include epoxy, vinyl ester and other resin system that may be nano-enhanced.

It is further contemplated and understood that the above process steps may be varied. For example, the at least partial consolidation of the mid-layers 84, 86, 88 may use a radiation cure such as ultraviolet light or an electron-beam if the binder is curable with radiation.

It is further contemplated and understood that the resin infiltration step may be eliminated if the resin is sprayed along with the chopped fibers as described above.

Benefits of the above outlined process include a composite vessel assembly generally having a uniform layer thickness, and without seams or overlap joints that may otherwise exist using, for example, a sheet molding compound (SMC) to wrap the liners 28, 30, 32. Moreover, the composite vessel assembly 20 may be light weight, corrosion resistant, and with no welds or joints commonly found with metallic tanks. The chopping, spraying and the use of thermoplastic fiber (as one example) may provide a high speed manufacturing process to meet the large CNG tank volume demand. Since the vessel assembly need not be a non-cylindrical shape, the assembly will provide the optimal conformability to a predetermined space.

## Claims

1. A method of manufacturing a composite pressure vessel assembly (20) comprising:
forming a perforated first liner (28) defining a first chamber (34);
applying a vacuum suction to the first chamber (34); and
applying a first fiber about the first liner (28) by spraying the first fiber onto the first liner (28);
wherein the first fiber is a chopped fiber
wherein the first fiber includes a binder; and
wherein the first fiber forms a composite layer (84).

2. The method set forth in claim 1 further comprising:
forming a perforated second liner (30) defining a second chamber (36);
applying a vacuum suction to the second chamber (36); and
applying the first fiber about the second liner (30).

3. The method set forth in claim 2 further comprising:
positioning the first liner (28) side-by-side with the second liner (30); and
enveloping the first fiber (28) with a second fiber (30).

4. The method set forth in any of claims 1-3, wherein the binder has a powder form.

5. The method set forth in claim 4 further comprising: applying heat to activate the binder.

6. The method set forth in any of claims 3-5 further comprising: consolidating, at least partially, at least one of the first and second fibers with pressure and heat.

7. The method set forth in any of claims 3-6, wherein the second fibers are a chopped fiber and applied through spraying.

8. The method set forth in any of claims 3 and 7 further comprising:
mixing a polymeric fiber with at least one of the first and second fibers; and
applying heat to melt the polymeric fiber to bind at least one of the first and second fibers together, wherein at least one of the first and second fibers is selected from a group comprising carbon fiber and glass fiber.

## Patentansprüche

1. Verfahren zum Herstellen einer Verbunddruckbehälteranordnung (20), umfassend:
Ausbilden eines perforierten ersten Einsatzes (28), der eine erste Kammer (34) definiert;
Aufbringen einer Vakuumsaugwirkung auf die erste Kammer (34); und
Aufbringen einer ersten Faser um den ersten Einsatz (28) durch Sprühen der ersten Faser auf den ersten Einsatz (28);
wobei die erste Faser eine geschnittene Faser ist wobei die erste Faser ein Bindemittel beinhaltet; und
wobei die erste Faser eine Verbundschicht (84) bildet.

2. Verfahren nach Anspruch 1, ferner Folgendes umfassend:
Ausbilden eines perforierten zweiten Einsatzes (30), der eine zweite Kammer (36) definiert;
Aufbringen einer Vakuumsaugwirkung auf die zweite Kammer (36); und
Aufbringen der ersten Faser um den zweiten Einsatz (30).

3. Verfahren nach Anspruch 2, ferner Folgendes umfassend:
Anordnen des ersten Einsatzes (28) Seite an Seite mit dem zweiten Einsatz (30); und
Umhüllen der ersten Faser (28) mit einer zweiten Faser (30).

4. Verfahren nach einem der Ansprüche 1-3, wobei das Bindemittel eine Pulverform aufweist.

5. Verfahren nach Anspruch 4, ferner Folgendes umfassend:
Aufbringen von Wärme, um das Bindemittel zu aktivieren.

6. Verfahren nach einem der Ansprüche 3-5, ferner Folgendes umfassend:
Verfestigen, mindestens teilweise, mindestens einer aus der ersten und der zweiten Faser mit Druck und Wärme.

7. Verfahren nach einem der Ansprüche 3-6, wobei die zweiten Fasern eine geschnittene Faser sind und durch Sprühen aufgetragen werden.

8. Verfahren nach einem der Ansprüche 3 und 7, ferner Folgendes umfassend:
Mischen einer Polymerfaser mit mindestens einem aus der ersten und der zweiten Faser; und
Aufbringen von Wärme, um die Polymerfaser zu schmelzen, um mindestens eine aus der ersten Faser und der zweiten Faser zusammenzubinden, wobei mindestens eine aus der ersten und der zweiten Faser aus einer Gruppe ausgewählt ist, die Carbonfaser und Glasfaser umfasst.

## Revendications

1. Procédé de fabrication d'un ensemble récipient sous pression composite (20) comprenant :
la formation d'un premier revêtement perforé (28) définissant une première chambre (34) ;
l'application d'une aspiration sous vide à la première chambre (34) ; et
l'application d'une première fibre autour du premier revêtement (28) par pulvérisation de la première fibre sur le premier revêtement (28) ;
dans lequel la première fibre est une fibre coupée dans lequel la première fibre inclut un liant ; et
dans lequel la première fibre forme une couche composite (84).

2. Procédé selon la revendication 1, comprenant en outre :
la formation d'un second revêtement perforé (30) définissant une seconde chambre (36) ;
l'application d'une aspiration sous vide à la seconde chambre (36) ; et
l'application de la première fibre autour du second revêtement (30) .

3. Procédé selon la revendication 2, comprenant en outre :
le positionnement du premier revêtement (28) côte à côte avec le second revêtement (30) ; et
l'enveloppement de la première fibre (28) avec une seconde fibre (30).

4. Procédé selon l'une quelconque des revendications 1 à 3, dans lequel le liant a une forme de poudre.

5. Procédé selon la revendication 4, comprenant en outre :
l'application de chaleur pour activer le liant.

6. Procédé selon l'une quelconque des revendications 3 à 5, comprenant en outre :
la consolidation, au moins partiellement, d'au moins l'une des première et seconde fibres avec pression et chaleur.

7. Procédé selon l'une quelconque des revendications 3 à 6, dans lequel les secondes fibres sont une fibre coupée et appliquées par pulvérisation.

8. Procédé selon l'une quelconque des revendications 3 et 7, comprenant en outre :
le mélange d'une fibre polymère avec au moins l'une des première et seconde fibres ; et
l'application de chaleur pour faire fondre la fibre polymère afin de lier au moins l'une des première et seconde fibres ensemble, dans lequel au moins l'une des première et seconde fibres est choisie dans un groupe comprenant la fibre de carbone et la fibre de verre.
